# EUROPEAN PATENT SPECIFICATION

(11) **EP 4 222 187 B1**
(45) Date of publication and mention of the grant of the patent: **30.10.2024**
(21) Application number: 21801302.7
(22) Date of filing: 29.09.2021
(51) Int. Cl.: C08G 18/18, C08G 18/20, C08G 18/32, C08G 18/48, C08G 18/76, C08K 3/36, C08K 9/06

(54) **FLEXIBLE POLYURETHANE FOAM AND FORMULATION THEREOF**
FLEXIBLER POLYURETHANSCHAUM UND FORMULIERUNG DARAUS
MOUSSE DE POLYURÉTHANE SOUPLE ET FORMULATION DE CELLE-CI

(30) Priority: 01.10.2020 US 202063086252 P
(43) Date of publication of application: 09.08.2023
(73) Proprietor: Cabot Corporation, Boston MA 02210 (US)
(72) Inventor: STEP, Eugene N., Billerica, Massachusetts 01821 (US); FOSTER, John K., Billerica, Massachusetts 01821 (US); SENDIJAREVIC, Ibrahim, Madison Heights, Michigan 48071 (US); SENDIJAREVIC, Vahid, Madison Heights, Michigan 48071 (US)
(74) Representative: Grünecker Patent- und Rechtsanwälte PartG mbB
(86) International application number: PCT/US2021/052545
(87) International publication number: WO 2022/072420

(56) References cited:
- WO-A1-2006/128793
- WO-A1-2011/054774
- JP-A- 2007 297 418
- US-A1- 2013 085 197

## Description

### BACKGROUND OF THE INVENTION

### 1. Field of the Invention.

This invention relates to formulations for flexible polyurethane foams and polymer foams made therewith.

### 2. Description of the Related Art.

The term "polyurethane" describes a wide variety of polymer compositions. Each of these polymer compositions contains polymers whose repeating units include -N-CO-O-linkages. In addition, polyurethanes may also include urea (-N-CO-N-) linkages However, the composition of the molecular chains between these urethane and urea linkages and the method of making the polymer also influence the final properties. Thus, polyurethanes with different compositions and/or made by different methods are used in diverse applications ranging from adhesives to coatings to elastomers to different types of foams. In general, polyurethanes are produced by the reaction of a polyisocyanate with a polyol (or polyamine, to produce a polyurea). Two different polyols may be used to create block co-polymers. For example, low molecular weight glycols and diamines result in the formation of short chains that associate through hydrogen bonding to form crystalline domains. A second, "softer" block may be formed with the use of polyether or polyester polyols, which result in amorphous domains. Such block copolymer compositions are typically used to form thermoplastic polyurethanes (TPUs). The tensile properties of the polymer are dictated by how tensile forces interfere with the hydrogen bonding in the crystalline domains.

Alternatively, polyurethane foams are typically formed by reaction of a diisocyanate with a polyol and a polyamine in the presence of a foaming agent. Rather than exploiting crystalline domains, mechanical properties are dictated in part by the contrast between the rigid urea linkages and the more flexible urethane bonds. The foaming agent may be an auxiliary agent, such as a volatile organic compound, or may be generated in situ. Addition of water to the reaction mixture results in two competing reactions, polycondensation and generation of carbon dioxide by reaction between the isocyanate and water. Increasing the functionality of the polyol and the isocyanate increases cross-link density earlier during polymerization, strengthening cell walls and largely preventing the increasing carbon dioxide pressure from breaking the cell walls, thereby increasing the rigidity of the foam. Rigid (closed cell) polyurethane foams are typically used for thermal insulation, while flexible (open cell) polyurethane foams are used for cushioning and sound insulation.

A variety of fillers are commonly employed in polyurethanes to modify their mechanical, electrical, and other properties. These fillers may be combined with the polymerized material, for example, via melt mixing, or incorporated into the prepolymer composition prior to polycondensation in an in-situ process. Fillers that are employed in an in-situ process must fulfill two functions. Not only do they need to provide desired properties to the finished product, but they also cannot interfere with the polymerization and foaming process to generate that product.

Fumed silica is frequently used to control thixotropy and pore size in polyurethane foams. In JP04850574, fumed silica is melt mixed into a polymerized polyurethane composition, following which carbon dioxide is injected to create pores. Likewise, fumed silica is used as a foam stabilizer in US20080153935. Still, it is desirable to incorporate fumed silica into a flexible polyurethane foam in an in-situ process in which fumed silica is combined with the precursor materials prior to polycondensation and allow the silica to contribute to the mechanical properties of the final material. US 2013/085197 A discloses a flexible polyurethane foam with improved compression behaviour, wherein the foam comprises fumed silica, which may be surface modified. The surface area of the silica is not specified.

### SUMMARY OF THE INVENTION

The use of a low surface area silica having trimethylsilyl groups at its surface in combination with a tertiary amine catalyst enables an in-situ polymerization process to result in a flexible polyurethane foam having beneficial properties.

In one embodiment, a method of producing flexible polyurethane foam, comprises providing a polyol composition comprising at least a first polyol, the first polyol having a weight average molecular weight of 3000 to 6000 and a functionality from 2.5 to 3.5, and up to 10 wt% of a fumed silica having a surface area from 50 to 150 m²/g, wherein the fumed silica has C1-C3 alkylsilyl groups at its surface, combining the polyol composition, a polyisocyanate having a functionality of 1.8 to 2.5, water, and a tertiary amine catalyst to form a prepolymer composition, allowing the prepolymer composition to polymerize to form an open cell foam structure having a density of 28.83 to 64.07 kg/m³ (1.8 to 4 pcf) and a) a resilience of at least 40%, for example, from 40% to 70%, b) a dry compression set no greater than 15%, for example, from 3% to 15%, or both. The flexible polyurethane foam may exhibit a density of 28.83 to 48.06 kg/m³ (1.8 to 3 pcf) or a density of 32.04 to 64.07 kg/m³ (2 to 4 pcf).

The polyisocyanate may comprise hexamethylene diisocyanate (HDI), phenylene diisocyanate (PDI), 2,4-toluene diisocyanate (2,4-TDI), 2,6-toluene diisocyanate (2,6-TDI), 4,4'-diphenylmethane diisocyanate (MDI), an isomeric mixture of diphenylmethane diisocyanate, or a mixture of two or more of these. The first polyol may comprise a polyether polyol or a polyester polyol. The polyol composition may further comprises a second polyol, the second polyol having a weight average molecular weight from 2000 to 10000. The fumed silica may have a BET surface area from 50 to 150 m²/g or from 50 to 100 m²/g. The C1-C3 alkylsilyl group may be trimethylsilyl or dimethylsilyl.

Allowing may comprise charging the prepolymer composition into a mold having one side open to the atmosphere, and the resulting flexible polyurethane foam may have a density of 28.83 to 48.06 kg/m³ (1.8 to 3 pcf). Alternatively, may comprise charging the prepolymer composition into a mold and closing the mold, and the resulting flexible polyurethane foam may have a density of 32.04 to 64.07 kg/m³ (2 to 4 pcf).

The flexible polyurethane foam may have a compression force deflection at 50% as measured by ASTM D3574 that is improved at least 30 %, for example, at least 50%, at least 70%, or from 30% to 155%, with respect to a flexible polyurethane foam produced by the same method but with the silica replaced with an equal part by mass of the first polyol.

In another embodiment, a flexible polyurethane foam comprises up to 10 wt% of a fumed silica having a surface area from 50 to 150 m²/g, wherein the fumed silica has C1-C3 alkylsilyl groups at its surface, the flexible polyurethane foam exhibiting has a resilience of at least 40%, for example, from 40% to 70%, a dry compression set no greater than 15%, for example, from 3% to 15%, or both. The fumed silica may have a BET surface area from 50 to 150 m²/g or from 50 to 100 m²/g. The C1-C3 alkylsilyl group may be trimethylsilyl or dimethylsilyl. The flexible polyurethane foam may be a molded foam or a free-rise foam. The polyurethane foam may comprise a polyether polyurethane or a polyester polyurethane. The flexible polyurethane foam may have a density of 28.83 to 64.07 kg/m³ (1.8 to 4 pcf), for example, a density of 28.83 to 48.06 kg/m³ (1.8 to 3 pcf) or a density of 32.04 to 64.07 kg/m³ (2 to 4 pcf).

The flexible polyurethane foam may have a compression force deflection at 50% as measured by ASTM D3574 that is at least 30%, for example, at least 50%, at least 70%, or from 30% to 155%, greater than a flexible polyurethane foam having the same composition but with polyol replacing the silica.

It is to be understood that both the foregoing general description and the following detailed description are exemplary and explanatory only and are intended to provide further explanation of the present invention, as claimed.

### BRIEF DESCRIPTION OF THE DRAWING

The invention is described with reference to the several figures of the drawing, in which,
Figure 1 shows the viscosity of polyol dispersions prepared with fumed silicas having different surface chemistries.
Figure 2 shows the viscosity of polyol dispersions prepared with fumed silicas having different surface areas.
Figure 3 shows the viscosity of polyol dispersions prepared with hydrophobic and hydrophilic (untreated) fumed silica.

### DETAILED DESCRIPTION OF THE INVENTION

In one embodiment, a method of producing flexible polyurethane foam includes providing a polyol composition comprising at least a first polyol, the first polyol having a weight average molecular weight of 3000 to 6000 and a functionality from 2.5 to 3.5, and up to 10 wt% of fumed silica having a surface area from 50 to 150 m²/g, wherein the fumed silica has C1-C3 alkylsilyl groups at its surface, combining the polyol composition, a polyisocyanate having a functionality of 1.8 to 2.5, for example from 1.8 to 2.25, water, and a tertiary amine catalyst to form a prepolymer composition, and allowing the prepolymer composition to polymerize under conditions in which an open cell foam structure having a density of 1.8 to 4 pcf is formed.

Flexible polyurethane foams are typically formed by reaction of a diisocyanate with a polyol and a polyamine in the presence of a foaming agent. For a flexible, open cell foam, the polyol typically has a functionality from 2.5-3.5, however in some instances higher functionality polyols may be used. This results in less cross linking than in rigid foams in which the polyol functionality is significantly higher, e.g., 4.5 to 5. Likewise, the use of polyisocyanates with a functionality up to 2.5, for example, diisocyanates or polyisocyanates having a functionality from 1.8 to 2.25, also reduces crosslink density in comparison to rigid foams, in which the isocyanate functionality is typically about 2.7 or greater.

Appropriate isocyanates for use with the formulations and processes provided herein include any organic isocyanate for use with polyurethane foams. Aromatic isocyanates are preferred but aliphatic, cycloaliphatic, and araliphatic isocyantes may be used as well. Exemplary isocyanates such as m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI (H12 MDI), naphthylene-1,5-diisocyanate, methoxyphenyl-2,4-diisocyanate, 4,4'-biphenylene diisocyanate, 3,3'-dimethoxy-4,4'-biphenyl diisocyanate, 3,3'-dimethyldiphenylmethane-4,4'-diisocyanate, 4,4',4"-triphenylmethane triisocyanate, polymethylene polyphenylisocyanates or mixtures thereof with MDI, hydrogenated polymethylene polyphenylisocyanates, toluene-2,4,6-triisocyanate, and 4,4'-dimethyl diphenylmethane-2,2',5,5'-tetraisocyanate.or mixtures of these. Tri-isocyanates are preferably used in a mixture with sufficient diisocyanate to result in a total functionality from 2 to 2.25.

Appropriate polymer polyols for use with the formulations and processes provided herein include both polyether polyols and polyester polyols and other polymer polyols known to those of skill in the art. Suitable polyols typically have a molecular weight, preferably weight average molecular weight, from 3000 to 6000. Appropriate polymer polyols for use in open cell foams have a hydroxyl number from 2.5 to 3.5, for example, from 2.5 to 3. Polyol mixtures may also be used. For example, polyols having lower or higher molecular weights may be combined to provide a desired average polyol molecular weight. Thus, one or more additional polyols having a weight average molecular weight from 2000 to 10000 may be combined with the first polyol.

Polyether polyols may be obtained by reacting a small molecule polyol with an alkylene oxide to form a polyether polyol. Exemplary small molecule polyols include but are not limited to ethylene glycol, diethylene glycol, triethylene glycol, 1, 2-propylene glycol, trimethylene glycol, tetramethylene glycol, hexamethylene glycol, glycerol, diglycerol, sorbitol, pentaerythritol, sucrose, and bisphenol A. Exemplary polyethers include polyalkylene oxides such as polyethylene oxide, polypropylene oxide, and polytetramethylene oxide. Alternatively or in addition, polymer polyols may be produced by copolymerizing vinyl monomers such as styrene or acrylonitrile with a polyol.

Polyester polyols may be obtained by reacting a small molecule polyol such as those described above with a polyester. Exemplary polyesters include any polyester known to those of skill in the art for use in flexible polyurethane foams and may be produced from an organic dicarboxylic acid, for example, a C2-C12 unbranched aliphatic chain terminated with carboxylic acid groups, and a di- or tri-functional alcohol, for example C2-C12 alkylene glycols or polyether alcohols.

Mixtures of polymer polyols may be employed as well. Exemplary polymer polyols include those disclosed in US201800223030, US9034936 and US10119002, the entire contents of which are incorporated herein by reference, with the proviso that the polyol formulation (either one or more polyols) should have an overall functionality (i.e., number of hydroxyl groups per molecule) from 2.5 to 3.

Tertiary amine catalysts are preferred over metallic and lower order amine catalysts to reduce the competition for the catalyst between the fumed silica and the polyol. Exemplary tertiary amine catalysts include any tertiary amine catalyst known to those of skill in the art to be suitable for production of polyurethane foams, including but not limited to dimethylethanolamine, triethylenediamine, tetramethylpropanediamine, tetramethylhexamethylediamine, and dimethylcyclohexylamine.

Additional components known to those of skill in the art for use in open cell polyurethane foams may also be employed. Examples include surfactants, viscosity modifiers, cross-linking agents, chain extenders, pigments, flame retardants, auxiliary gelling catalysts, auxiliary blowing catalysts, and combinations of any of these. Additional polyols may also be used to introduce different copolymers or functionalities to the polyurethane, such as promotion of cell formation or cell opening. Additional fillers such as styrene acrylonitrile beads, barium sulfate, or calcium carbonate, may be employed in combination with the fumed silica provided herein.

Fumed silica is typically produced via a pyrogenic process in which a gaseous feedstock comprising a fuel, e.g., methane or hydrogen, oxygen, and a volatile silicon compound is fed into a burner. Water formed by the combustion of the fuel in oxygen reacts with the volatile silicon compound either in liquid or gaseous form to produce silicon dioxide particles. These particles coalesce and aggregate to formed fumed silica.

During formation of polyurethane foam, it is desirable to balance the properties of the formulation to coordinate the growth of carbon dioxide bubbles with the cross-linking of the polyol component. If the formulation is too viscous, diffusion of carbon dioxide, formed by reaction of water with the isocyanate, will slow down. In addition, the expanding gas will not impart enough pressure to displace the liquid formulation and form appropriately sized bubbles. Silica dispersed in a liquid system affects its rheological properties via two different interactions. First is the attraction between individual silica particles. The aggregated structure of fumed silica allows it to form chain-like networks which can be interrupted under agitation or shear, making fumed silica an efficient thixotrope. Formation of these networks are favored in systems with high surface area (small primary particle) silica. Thus, in preferred embodiments, the fumed silica used herein has a surface area, as measured by nitrogen adsorption (ASTM D1993), not greater than 150 m²/g, for example, not greater than 130 m²/g or not greater than 100 m²/g. The second interaction is that between the liquid matrix and the silica surface. In hydrophilic polyol systems, surface-treated silicas that are highly hydrophobic and have low affinity for the polyol are expected to have strong particle-particle interactions and promote high yield stress. In contrast, non-surface treated silicas disperse well in liquids such as water or methanol and do not significantly modify viscosity. Thus, in complex formulations, careful modification of the silica surface can have dramatic effects on system rheology.

As produced, fumed silica is hydrophilic, with multiple Si-OH groups on the surface. These silanol groups can interact with alcohols via hydrogen bonding and with the oxyalkylene groups of polyethers via acid-base interactions. Thus, untreated silica is expected to have a small effect on polyol viscosity. However, the hydroxyl groups of the silica can compete with the hydroxyl groups of the polyol in the polymerization. Hydrophobization of the silica endcaps a proportion of the silanol groups. However, hydrophobization also modifies the interfacial interactions between the silica and both the prepolymer formulation and the final polymer, potentially changing the viscosity behavior of the prepolymer formulation and/or the mechanical properties of the flexible polyurethane foam. Moreover, the hydrophobizing treatment preferably does not interfere with the polymerization reaction.

It has been unexpectedly found that hydrophobization of fumed silica with an agent that leaves short alkylsilyl groups on the surface reduces competition of the silica with the polymer polyol without undesirably increasing viscosity. In contrast, surface treatments with larger alkyl or siloxyl chains on the surface are too hydrophobic and will adversely affect foam development. Preferable surface treatments leave C1-C3 alkylsilyl groups on the surface, for example, trimethylsilyl, dimethylsilyl, ethylsilyl, or methylethylsilyl groups. The silyl group may be attached to the surface of the fumed silica by one, two, or three siloxane bonds or may be linked to one or two adjacent alkylsilane groups via a siloxane bond.

Thus, the fumed silica may be hydrophobized with a silazane such as hexamethyl disilazane or an alkylsilane such as dimethyldichlorosilane, methyltrimethoxysilane, methyl trichlorosilane, methyltrimethoxysilane, methyltriethoxysilane, dimethyldimethoxysilane, dimethyldiethoxysilane, trimethylchlorosilane, trimethylmethoxysilane, trimethylethoxysilane, ethyltriethoxysilane, ethyltrichlorosilane, ethyltrimethoxysilane, propyltrichlorosilane, propyltrimethoxysilane, propyltriethoxysilane, ethylmethyldichlorosilane, and other C1-C3 linear and branched alkyl silanes.

The high surface area and branched structure of fumed silica also enhances its surface interactions with the surrounding polymer matrix. This interaction allows the silica to reinforce the polymer foam more effectively than sol-gel or precipitated silicas. Thus, it is desirable for the silica to have sufficient surface area, e.g., at least 50 or 60 m²/g, to provide reinforcement.

The components of the polyurethane may be combined and polymerized using any method known to those of skill in the art. Preferably, the fumed silica is dispersed in polyol according to methods known to those of skill in the art, which may then be combined with one or more remaining non-isocyanate components of the polyurethane prior to being combined with the polyisocyanate and polymerized. The polyurethane foam may be a free rise foam, in which the polymerization occurs in a container that is open to atmospheric pressure, or a molded foam, in which polymerization occurs in an enclosed mold. Closing the mold after charging the unpolymerized material into it creates a constrained space for expansion of the polyurethane foam. Thus, the density of the foam may be controlled in part by varying the amount of material in the closed mold, while the density of a free rise foam may be controlled by adjusting the formulation to control the generation of carbon dioxide and the relative rates of polymerization and carbon dioxide formation. Typical free rise foam densities are from 28.83 to 48.06 kg/m³ (1.8 to 3 pcf), while typical molded foam densities are from 32.04 to 64.07 kg/m³ (2 to 4 pcf).

For either free rise or molded foams, the use of silica as described herein provides reinforcement to the foam without dramatically reducing the flexibility imparted by the open cell structure of the foam. Preferably, the polyurethane foam has a resilience of at least 40%, for example, from 40% to 70%. Alternatively or in addition, the polyurethane foam has a dry compression set no greater than 15%, for example, from 3% to 15%. Alternatively or in addition, the addition of fumed silica as described herein improves the compression force deflection. For example, the CFD at 50% as measured by ASTM D3574, Test C, may be improved by at least 30%, for example, at least 50%, at least 70%, or from 30% to 155%, with respect to a silica-free formulation.

The present invention will be further clarified by the following examples which are intended to be only exemplary in nature

### EXAMPLES

### Example 1

CAB-O-SIL TG-6110 hydrophobic fumed silica, having a BET surface area of 85 m²/g and trimethylsilyl groups at the surface, (Cabot Corporation) was dispersed in Pluracol 2090 polyether polyol triol (BASF) to form a 15 wt% dispersion. Silica dispersions were produced as 350 g batches using a SpeedMixer (Flackteck, Landrum, SC) followed by a plenary mixer (PC Laborsystem Labotop). Polyol was weighed into a 600 g plastic container and silica was added in stages until all material was incorporated. The material was then mixed at 2350 rpm for 5 minutes and cooled to room temperature. This mixing sequence was repeated three more times for a total of 20 minutes of mixing to ensure complete mixing. Two batches were combined and de-aerated in the plenary mixer under 1 bar vacuum for 15 minutes. An appropriate amount of the dispersion and additional Pluracol 2090 polyol were charged into a 400 mL polyethylene beaker as indicated in Table 1-1, along with additional components in the amounts listed in Table 1-2, to prepare polyol component formulations having 0%, 2%, 4%, 6%, 8%, and 10% fumed silica by total weight of polyol component. The silica-polyol dispersion was employed as a drop-in replacement for an equal amount of neat polyol on a mass basis to achieve the desired fumed silica concentration in the polyol component. A silica-free control polyol component was prepared with 97 g Pluracol 2090 polyol and additional raw materials in the amounts listed in Table 1-2. The polyol component was combined with polyisocyanate (Suprasec 7007 polyisocyanate; Huntsman) in the amounts indicated in Table 1-3 (isocyanate index = 90) in a 400 mL tri-pour polyethylene cup for 7 s using a high-torque mixer (CRAFSTMAN 10-Inch Drill Press, Model No. 137.219000) at 3,100 rpm at ambient temperature and then transferred into a polyethylene lined box (6" x 6" x 3"; 15.24 x 15.24 x 7.62 cm). Following completion of foam rise, all foams were placed into an air-circulating oven preheated to 70 °C for 30 min. to complete cure. Three samples were prepared for each formulation.

**Table 1-1**

| Example | 1C (no silica) | 1-1 | 1-2 | 1-3 | 1-4 | 1-5 |
|---|---|---|---|---|---|---|
| %Fumed silica in polyol component | 0 | 2 | 4 | 6 | 8 | 10 |
| Dispersion amount (g) | 0 | 14.2 | 28.36 | 42.54 | 56.71 | 70.89 |
| Additional Pluracol 2090 (g) | 97 | 82.8 | 68.64 | 54.46 | 40.29 | 26.11 |
| Added water (g) | 3.45 | 3.44 | 3.44 | 3.44 | 3.44 | 3.44 |

**Table 1-2**

| Raw Material | Source | Amount (g) |
|---|---|---|
| Lumulse POE 26 ethoxylated glycerin (polyol) | Lambent | 3 |
| Tegostab B 4690 polyether/silicone oil (surfactant) | Evonik | 1 |
| Dabco 33LV triethylenediamine in dipropylene glycol (catalyst) | Air Products | 0.8 |
| Diethanolamine LF 85% (catalytically active chain extender/cross-linker) | Huntsman | 1 |
| Toyocat ET bis(2-dimethylaminoethyl) ether (catalyst) | TOSOH | 0.1 |
| Total water | | 3.6* |
| *Total water includes residual water from other components and added water from Table 1-1 | | |

**Table 1-3**

| Example | 1C (no silica) | 1-1 | 1-2 | 1-3 | 1-4 | 1-5 |
|---|---|---|---|---|---|---|
| Total mass of polyol component (g) | 106.35 | 106.34 | 106.34 | 106.34 | 106.34 | 106.34 |
| Isocyanate amount (g) | 61.74 | 61.60 | 61.45 | 61.31 | 61.16 | 61.01 |

Rectangular foams were characterized by foam density (ASTM D3574, Test A), resilience via ball rebound (ASTM D3574, Test H), tensile strength at break (ASTM D3574, TestE), elongation at break (ASTM D3574, Test E), compression force deflection at 25%, 50%, and 65% (ASTM D3574, Test C), tear strength (ASTM D-624, Die C), and average cell size (ASTM D3576).

The apparent cell structure of foams with 2% and 4% fumed silica based on total polyol component (1.3% and 2.5% based on total foam weight, respectively) was uniform and cell size was not significantly affected by fumed silica in comparison to the reference foam (Table 1-4). However, foams with 6% fumed silica based on total polyol component (3.8% based on total foam weight) exhibited slightly coarse cell structure. The cell structure became more coarse with further increase in the amount of fumed silica in the formulation.

**Table 1-4**

| Property | Example 1-Comp (no silica) | Example 1-1 (2% silica in polyol component) | Example 1-2 (4% silica in polyol component) |
|---|---|---|---|
| Apparent cell structure | Uniform | Uniform | Uniform |
| Density | 2.44 ± 0.03 | 2.37 ± 0 | 2.50 ± 0.02 |
| Resilience via ball rebound | 60 ± 1 | 58 ± 1 | 58 ± 1 |
| Tensile Strength at break (Test E), [psi] | 15.8 ± 1.3 | 16.8 ± 1.2 | 16.0 ± 1.1 |
| | 108.9 ± 9.0 | 115.8 ± 8.3 | 110.3 ± 7.6 |
| [KPa] | | | |
| Elongation at break (Test E), % | 123 ± 8 | 125 ± 9 | 117 ± 6 |
| Tear Strength (DieC), [lbf/in] | 3.06 ± 0.26 | 3.90 ± 0.32 | 4.17 ± 0.38 |
| [N/cm] | 5.36 ± 0.46 | 6.83 ± 0.56 | 7.30 ± 0.67 |
| CFD @ 25% (Test C), kPa | 1.19 ± 0.06 | 1.38 ± 0.10 | 1.64 ± 0.08 |
| CFD @ 50% (Test C), kPa | 2.36 ± 0.12 | 2.75 ± 0.14 | 3.09 ± 0.17 |
| CFD @ 65% (Test C), kPa | 5.18 ± 0.45 | 5.57 ± 0.44 | 6.32 ± 0.46 |
| Cell size, mm | 1.06 ± 0.08 | 0.94 ± 0.08 | 0.93 ± 0.08 |

The density, resilience, tensile strength and elongation were not significantly affected by introduction of 1.3% and 2.5% of fumed silica based on total foam weight (Table 1-4). However, the tear strength and compression force deflection (CFD) values significantly increased with introduction of such small amounts of fumed silica (Table 1-4).

Off-gassing was observed during foam rise of foams produced with 3.8%, 5.1%, and 6.4% fumed silica based on total foam weight (employing polyol components with 6%, 8%, and 10% fumed silica). The cell structure was coarser as well. It is hypothesized that this results from the cell-opening effects of the fumed silica. However, these samples exhibited CFD at 50% of 3.29 ± 0.21, 3.86 ± 0.20, and 4.21 ± 0.46 respectively, indicating that the silica still provides reinforcement to the foam.

### Example 2

To optimize the cell structure, additional foams were prepared using a polyol component having 10% fumed silica using the method described above and the formulation set forth in Table 2-1 below, in which the surfactant (Tegostab B 4690 surfactant) and cell-opening polyol (Lumulse POE 26 polyol) concentration were adjusted and propylene carbonate (1,2 propanediol cyclic carbonate 99.7%, Sigma-Aldrich) was to the polyol component of some formulations to decrease viscosity. About half of the polyol component (amounts as indicated in Table 2-1) was combined with sufficient isocyanate for an isocyanate index of 90 in a 400 mL tri-pour polyethylene cup (exact amount in Table 2-1), mixed for 7 s as described in Example 1, poured into a 1000mL polyethylene tri-pour beaker and allowed to free-rise.

**Table 2-1**

| **Composition of Polyol Component(g)** | **Ex. 2-1** | **Ex. 2-2** | **Ex. 2-3** | **Ex. 2-4** | **Ex 2-5** | **Ex. 2-6** | **Ex. 2-7** |
|---|---|---|---|---|---|---|---|
| 10% fumed silica dispersion | 70.89 | 71.3 | 70.2 | 68.9 | 72.2 | 70.9 | 70.2 |
| Pluracol 2090 | 26.11 | 25.7 | 26.8 | 28.1 | 24.8 | 26.1 | 26.8 |
| Propylene Carbonate | 0 | 0 | 0 | 0 | 2 | 2 | 2 |
| Lumulse POE 26 | 3 | 3 | 2 | 0 | 3 | 1 | 0 |
| Tegostab B 4690 | 1 | 1.6 | 1 | 1 | 1 | 1 | 1 |
| Dabco 33LV | 0.8 | 0.8 | 0.8 | 0.8 | 0.8 | 0.8 | 0.8 |
| Diethanolamine LF 85% | 1 | 1 | 1 | 1 | 1 | 1 | 1 |
| Toyocat ET | 0.1 | 0.1 | 0.1 | 0.1 | 0.1 | 0.1 | 0.1 |
| Added Water* | 3.44 | 3.44 | 3.44 | 3.44 | 3.44 | 3.44 | 3.44 |

| **Composition of PU System (g)** | | | | | | | |
|---|---|---|---|---|---|---|---|
| Polyol component | 53.17 | 53.47 | 52.67 | 51.67 | 54.17 | 53.17 | 52.67 |
| Suprasec 7007 | 30.51 | 30.54 | 30.36 | 30.06 | 30.50 | 30.20 | 30.05 |
| Cell Structure | Coarse | Coarse | Slightly Coarse | Fine | Slightly Coarse | Fine | Very fine |

| | | | | | | | |
|---|---|---|---|---|---|---|---|
| *Added water plus residual water = 3.6 g | | | | | | | |

As shown in Table 2-1, the cell structure did not improve when the surfactant concentration was increased (Examples 2-1 and 2-2). However, cell structure improved significantly when the amount of cell-opening polyol was decreased (Examples 2-3 and 2-4). Viscosity may also influence the foaming process - addition of propylene carbonate also reduced the coarseness of the cell structure, especially in combination with reduced amounts of cell-opening polyol (Examples 2-5, 2-6, 2-7).

### Example 3

Open-cell polyurethane foams were produced with polyol components having 0% (comparative), 6%, 8%, and 10% CAB-O-SIL TG-6110 fumed silica in the polyol component formulation indicated in Table 3-1 below (similar to Example 2-6), combined with isocyanate in the amount indicated below using the method described in Example 1 (isocyanate index of 90) and dispensed into a 6"x6"x3" polyethylene lined box and allowed to free-rise as described in Example 1. The resulting foams had 0%, 3.8%, 5.1%, and 6.4% fumed silica. The cell structure of all foams was uniform. Three samples were prepared for each formulation.

**Table 3-1**

| Component (g) | Example 3-Comp | Example 3-1 | Example 3-2 | Example 3-3 |
|---|---|---|---|---|
| Fumed silica-polyol dispersion | 0 | 42.15 | 56.2 | 70.2 |
| Pluracol 2090 | 97 | 54.85 | 40.8 | 26.8 |
| Propylene Carbonate | 0 | 2 | 2 | 2 |
| Lumulse POE26 | 3 | 0 | 0 | 0 |
| Tegostab B 4690 | 1 | 1 | 1 | 1 |
| Dabco 33LV | 0.8 | 0.8 | 0.8 | 0.8 |
| Diethanolamine LF 85% | 1 | 1 | 1 | 1 |
| Toyocat ET | 0.1 | 0.1 | 0.1 | 0.1 |
| Added water* | 3.45 | 3.44 | 3.44 | 3.44 |
| * Added water plus residual water equals 3.6 of total water. | | | | |
| Suprasec 7007 isocyanate | 61.74 | 60.39 | 60.24 | 60.10 |

Results of cell size measurements and mechanical testing (performed as described in Example 1) are provided in Table 3-2. The cell size of the foam with 3.8% fumed silica was significantly smaller than that of the comparative foam. Cell size increased with fumed silica loading but was consistently smaller than that of the comparative foam. The resilience and elongation at break decreased with increasing the amount of FS in the formulation. The tensile strength, tear strength and CFD values of foams prepared with FS were significantly higher in comparison to the reference foam at the same density.

**Table 3-2**

| Properties | Example 3-Comp | Example 3-1 | Example 3-2 | Example 3-3 |
|---|---|---|---|---|
| Density, [pcf] | 2.44 ± 0.03 | 2.41 ± 0.03 | 2.38 ± 0.02 | 2.43 ± 0.04 |
| [kg/m³] | 39.08 ± 0.48 | 38.60 ± 0.48 | 38.13 ± 0.32 | 38.93 ± 0.64 |
| Resilience via ball rebound, % | 60 ± 1 | 49 ± 1 | 49 ± 1 | 47 ± 1 |
| Tensile Strength at break, [psi] | 15.8 ± 1.3 | 18.8 ± 1.4 | 21.0 ± 1.4 | 17.0 ± 0.8 |
| [KPa] | 108.9 ± 9.0 | 129.6 ± 9.7 | 144.8 ± 9.7 | 117.2 ± 9.0 |
| Elongation at break, % | 123 ± 8 | 120 ± 8 | 113 ± 7 | 98 ± 7 |
| Tear Strength, [lbf/in] | 3.06 ± 0.26 | 4.24 ± 0.25 | 3.92 ± 0.25 | 4.04 ± 0.13 |
| [N/cm] | 5.36 ± 0.46 | 7.42 ± 0.44 | 6.86 ± 0.44 | 7.07 ± 0.23 |
| CFD @ 25%, kPa | 1.19 ± 0.06 | 2.20 ± 0.12 | 2.56 ± 0.16 | 2.95 ± 0.23 |
| CFD @ 50%, kPa | 2.36 ± 0.12 | 4.13 ±0.29 | 4.70 ± 0.30 | 5.53 ± 0.45 |
| CFD @ 65%, kPa | 5.18 ± 0.45 | 8.10 ± 0.58 | 8.40 ± 0.76 | 9.97 ± 0.56 |
| Cell Size, mm | 1.06 ± 0.08 | 0.78 ± 0.07 | 0.94 ± 0.06 | 0.92 ± 0.08 |

### Example 4

A silica free (comparative) polyol component and polyol components containing 2%, 4%, 6%, 8%, and 10% fumed silica according to the formulation in Example 1 were sealed and aged at ambient temperature in a closed cabinet. After two weeks, the polyol component with 2% fumed silica was a thick liquid and only flowed slowly, while the remaining samples with higher fumed silica concentrations had a paste-like appearance and did not flow when turned upside down. In contrast, the reference composition remained fluid.

Additional polyol component formulations were prepared with 10% fumed silica as shown in Table 4-1 below; the viscosity of these formulations after aging at ambient temperature for various times is also shown (arrows indicate that viscosity was still rising when the measurement was taken). Viscosity was measured in a Brookfield Viscometer, Model LVF according to ASTM D-4878.

**Table 4-1**

| Component (g) | Example 4-1 | Example 4-2 | Example 4-3 | Example 4-4 | Example 4-5 | Example 4-6 |
|---|---|---|---|---|---|---|
| Fumed silica - polyol dispersion | 70.89 | 70.89 | 70.89 | 70.89 | 70.89 | 70.89 |
| Pluracol 2090 | 26.11 | 26.11 | 26.11 | 26.11 | 26.11 | 26.11 |
| Lumulse POE26 | 3 | 3 | 3 | 3 | 3 | 3 |
| Tegostab B 4690 | 1 | 1 | 1 | 1 | 1 | 1 |
| Dabco 33LV | 0.8 | 0.8 | 0 | 0 | 0.8 | 0 |
| Diethanolamine LF 85% | 1 | 0 | 0 | 1 | 0 | 0 |
| Triethanolamine | 0 | 0 | 0 | 0 | 1 | 1 |
| Toyocat ET | 0.1 | 0.1 | 0 | 0 | 0.1 | 0 |
| Added water | 3.44 | 3.44 | 3.44 | 3.44 | 3.44 | 3.44 |
| **Viscosity (mPa-s)** | | | | | | |
| Initial | 5,530 | 5,750 | 5,580 | 6,620 | 6,340 | 6,200 |
| 1 day | 9,960 | 7,800 | 5,570 | 9,000 | 8,400 | 6,480 |
| 2 days | 25,500 | 7,840 | 5,500 | 27,350 | 10,180 | 6,480 |
| 3 days | paste | 9,440 | 5,490 | paste | 12,120 | |
| 5 days | paste | - | - | paste | - | 6,730 |
| 6 days | paste | 19,500 ↑ | 5,400 | paste | 21,700 ↑ | 6,740 |

The viscosity of the polyol component that was prepared without Dabco 33LV catalyst and without any diethanolamine (DEA) did not change with time (Example 4-3). The viscosity of the polyol components containing either one of these two products (Dabco 33LV or DEA) increased with time (Examples 4-2 and 4-4). The polyol component prepared with DEA and without Dabco 33LV had consistency of a paste after only three days. The polyol component prepared with Dabco 33LV and without DEA changed to a very viscose liquid after 6 days.

The viscosity of the polyol component prepared with triethanolamine (TEOA) instead of DEA and also without Dabco 33LV changed only slightly, if at all, after storage for six days (Example 4-6). The change in viscosity of the polyol component prepared with TEOA and Dabco 33LV was comparable to that of the polyol component prepared with Dabco 33LV without any amine chain extender (Examples 4-2 and 4-5). These results clearly indicate that fumed silica interacts more with secondary amines than with tertiary amines. Moreover, the use of amine chain extenders or cross-linkers may not be necessary in open cell PU systems employing fumed silica.

### Example 5

CAB-O-SIL TG-6110 hydrophobic fumed silica (Cabot Corporation) was dispersed in Pluracol 2090 polyether triol (BASF) as described above to form a 15 wt% dispersion. The dispersion was combined with additional components, including Poly-G 85-29 ethylene oxide capped polyether polyol triol (Monument Chemical), in the proportions set forth in Table 5-1 below to form the polyol component. Similar to Example 1, the silica-polyol dispersion was employed as a drop-in replacement for an equal amount of neat polyol on a mass basis to prepare polyol components having silica concentrations of 0%, 2%, 4%, 6%, 8%, and 10%. A total of 223.34 g of the polyol component was combined with 131.52 g Suprasec 7007 polyisocyanate (to achieve an isocyanate index of 90) in a 1000 mL tri-pour polyethylene cup for 7 s using a high-torque mixer (CRAFSTMAN 10-Inch Drill Press, Model No. 137.219000) at 3,100 rpm at ambient temperature and then, before the liquid mixture became cloudy and started to expand, poured into a 12" x 12" x 2" (30 cm x 30 cm x 5 cm) aluminum mold preheated to 70 °C. After pouring, the mold was closed and the foam allowed to cure for 260 s before the mold was opened and the foam demolded. All molded foams were aged in ambient atmosphere for at least one week before testing. The foam pads were hand-crashed (i.e., compressed by hand to open cell windows) immediately following demolding. In addition to the tests described in Example 1, foams were characterized by the following tests under ASTM D-3574: dry constant deflection compression set (Test D), humid age compression set (Test D with Test L wet heat aging), humid age load (CFD) loss (Test C with Test L - wet heat aging; 22h @ 50°C and 95% relative humidity and also Test C with Test J₂ - steam autoclave aging; 5 h @ 120°C). Molded foams were also evaluated for CFD at 25%, 50%, and 65% deflection as described in Example 1, but with 60s dwell time. Two foam samples were measured using each formulation.

**Table 5-1**

| Component (g) | 5-Comp | 5-1 | 5-2 | 5-3 | 5-4 | 5-5 |
|---|---|---|---|---|---|---|
| Wt% fumed silica in polyol component | 0 | 2 | 4 | 6 | 8 | 10 |
| Wt% fumed silica in foam | 0 | 1.3 | 2.5 | 3.8 | 5.1 | 6.3 |
| Fumed silica dispersion | 0 | 14.2 | 28.36 | 42.15 | 56.2 | 71.48 |
| Poly-G 85-29 | 97 | 82.8 | 68.64 | 54.85 | 40.8 | 25.52 |
| Lumulse POE 26 | 3 | 3 | 3 | 0 | 0 | 0 |
| Propylene Carbonate | 0 | 0 | 0 | 2 | 2 | 4 |
| Tegostab B 4690 | 1 | 1 | 1 | 1 | 1 | 1 |
| Dabco 33LV | 0.8 | 0.8 | 0.8 | 0.8 | 0.8 | 0.8 |
| Diethanolamine LF 85% | 1 | 1 | 1 | 1 | 1 | 1 |
| Toyocat ET | 0.1 | 0.1 | 0.1 | 0.1 | 0.1 | 0.1 |
| Added water* | 3.45 | 3.42 | 3.39 | 3.37 | 3.34 | 3.31 |
| * Added water plus residual water equals 3.6 of total water. | | | | | | |

Molded foams prepared with 0%, 1.3%, 2.5%, 3.8% FS based on total foam weight (0%, 2%, 4%, and 6% FS based on total polyol components, respectively) exhibited uniform surface (skin) and uniform apparent cell structure. Some imperfections on the skin were observed in foams prepared with 5.1% and 6.3% fumed silica based on total foam weight (8% and 10% FS based on total polyol components, respectively). However, the cell structure of these foams was uniform regardless of the slight skin imperfections. Mechanical properties of the resulting foams are listed in Table 5-2. The resilience of molded foams decreased with increasing concentrations of fumed silica.

**Table 5-2**

| Example | 5-Comp | 5-1 | 5-2 | 5-3 | 5-4 | 5-5 |
|---|---|---|---|---|---|---|
| Core Density, [pcf] [kg/m³] | 3.52±0.03 56.39±0.48 | 3.52±0.06 56.39±0.96 | 3.52±0.05 56.39±0.80 | 3.51±0.04 56.23±0.64 | 3.44±0.06 55.11±0.96 | 3.49±0.05 55.91±0.80 |
| Resilience via ball rebound, % | 53 ± 1 | 54 ± 1 | 50 ± 2 | 45 ± 2 | 45 ± 1 | 41 ± 1 |
| Tensile Strength at break, [psi] [KPa] | 23.6 ± 1.1 162.7 ±7.6 | 23.3 ± 2.0 160.7±13.8 | 23.4 ± 1.2 161.3 ±8.3 | 24.2 ± 1.2 166.9 ± 8.3 | 23.4 ± 1.7 161.3±11.7 | 26.1 ± 1.5 180.0±10.3 |
| Elongation at break, % | 109 ± 9 | 109 ± 8 | 114 ± 10 | 103 ± 9 | 96 ± 6 | 96 ± 8 |
| Tear Strength, [lbf/in] [N/cm] | 5.35±0.34 9.36 ± 0.60 | 4.56±0.12 7.98 ± 0.21 | 4.75±0.34 8.31 ± 0.60 | 4.91±0.27 8.59 ± 0.47 | 5.94±0.32 10.40±0.56 | 5.14±0.26 9.00 ± 0.46 |
| CFD @ 25%, kPa | 4.80±0.16 | 5.68±0.15 | 6.16±0.15 | 8.33±0.52 | 9.34±0.81 | 8.61±0.30 |
| CFD @ 50%, kPa | 7.31±0.23 | 9.02±0.33 | 9.81±0.23 | 12.83±0.74 | 15.74±1.27 | 12.63±0.65 |
| CFD @ 65%, kPa | 12.61±0.67 | 15.47±0.91 | 16.22±0.36 | 21.82±1.67 | 23.61±1.85 | 17.98±2.61 |
| CFD @ 50% Deflection for 60s, kPa | 6.09±0.20 | 7.08±0.29 | 7.95±0.22 | 9.68±0.27 | 11.03±0.86 | 10.85±0.83 |
| %Change of CFD @ 50% Deflection for 60s - Wet Heat Aging | -18.1 | -5.7 | -5.5 | -17.2 | 8.6 | 12.3 |
| %Change of CFD @ 50% Deflection for 60s - Steam Autoclave Aging | 22.6 | 24.1 | 31.2 | 11.8 | 13.0 | 2.1 |
| Dry Compression Set @ 70°C, 50% Deflection (Ct), % | 6.30±0.27 | 5.49±0.34 | 6.95±0.17 | 11.63±0.79 | 9.07±0.30 | 13.90±0.36 |
| Wet Compression Set @ 50°C, 50% Deflection (Ct), % | 11.36±0.35 | 12.67±0.55 | 12.35±0.75 | 18.91±0.70 | 23.26±0.57 | 24.54±0.65 |

### Example 6

15% dispersions of CAB-O-SIL TG-6110 (Examples 6-x) and CT1221 (Examples 6-Cx) silicas (Cabot Corporation; CT1221 silica has a BET surface area of 180-250 m²/g and trimethylsilyl groups at the surface) were prepared in Jeffol G 31-28 glycerin based, ethylene oxide tipped triol (Huntsman) as described in Example 1. Polyol components were prepared as described in Example 1 using the formulations set out in Table 6-1 (including Voranol-Voractiv 6340 polyether polyol (Dow), Dabco NE300 blowing catalyst (Evonik), Dabco NE1091 gelling catalyst (Evonik), Dabco DC193 surfactant (Evonik), propylene carbonate (see Example 2), and diethanolamine LF 85% (Webb Chemical)). The polyol component was combined with Lupranate T80 isocyanate (mixture of 2,4- and 2,6-toluene diisocyanate, Huntsman) in the amount specified in Table 6-2 (isocyanate index of 90) and cast in polyethylene lined boxes as described in Example 1 ("Free-rise foams"). Free-rise foams were prepared in duplicate. The polyurethane formulations specified in Table 6-2 were scaled up 250% for Example 6-C1 and 257% for Examples 6-1 and 6-2 to prepare molded foams according to the methods set out in Example 5. Molded foams were prepared in duplicate. Foams were evaluated as set forth above.

**Table 6-1a**

| Component (g) | Example (Silica in Polyol Component/Final Formulation (wt%)) | | | |
|---|---|---|---|---|
| | Example 6-C1 (no silica) | Example 6-1 (TG-6110 silica; 6/3.8) | Example 6-2 (TG-6110 silica, 8/5.1) | Example 6-C2 (CT-1221 silica, 6/3.8) |
| Jeffol G 31-28 | 65 | 30 | 19 | 30 |
| Voronol-Voractiv 6340 | 35 | 35 | 35 | 35 |
| Fumed silica dispersion | 0 | 35 | 46 | 35 |
| Tegostab B4690 | 1 | 1 | 1 | 1 |
| Diethanolamine | 1 | 1 | 1 | 1 |
| Dabco NE300 | 0.26 | 0.26 | 0.26 | 0.26 |
| Dabco NE1091 | 1.40 | 1.40 | 1.40 | 1.40 |
| Added Water* | 2.80 | 2.80 | 2.80 | 2.80 |
| Free-rise foam appearance | Uniform, fine texture | Uniform, fine texture | Uniform, fine texture | Collapse at 71-74 s |

| | | | | |
|---|---|---|---|---|
| *Added water = total water in formulation | | | | |

**Table 6-1b**

| Component (g) | Example (CT-1221 Silica in Polyol Component/Final Formulation (wt%)) | | | | |
|---|---|---|---|---|---|
| | 6-C3 (6/3.8) | 6-C4 (6/3.8) | 6-C5 (6/3.8) | 6-C6 (6/3.8) | 6-C7 (4/1.9) |
| Jeffol G 31-28 | 30 | 30 | 30 | 30 | 47.5 |
| Voronol-Voractiv 6340 | 35 | 35 | 35 | 35 | 35 |
| Fumed silica dispersion | 35 | 35 | 35 | 35 | 17.5 |
| Tegostab B4690 | 1.5 | 0.7 | 0.85 | 1 | 1 |
| Dabco DC 193 | - | 0.3 | 0.15 | - | |
| Propylene carbonate | - | - | - | 2 | |
| Diethanolamine | 1 | 1 | 1 | 1 | 1 |
| Dabco NE300 | 0.26 | 0.26 | 0.26 | 0.26 | 0.26 |
| Dabco NE1091 | 1.40 | 1.40 | 1.40 | 1.40 | 1.40 |
| Added Water* | 2.80 | 2.80 | 2.80 | 2.80 | 2.80 |
| Free-rise foam appearance | Collapse at 75 s | Horizontal split in center | Collapse at 81 s | Collapse at 75 s | Slow sag following complete rise |

| | | | | | |
|---|---|---|---|---|---|
| *Added water = total water in formulation | | | | | |

**Table 6-2**

| Example No. | Amount of Polyol Component (g) | Amount of Lupranate T80 isocyanate | Free-rise Foam appearance |
|---|---|---|---|
| 6-C1 | 106.1 | 30.63 | Uniform, fine |
| 6-1 | 106.1 | 30.43 | Uniform, fine |
| 6-2 | 106.1 | 30.36 | Uniform, fine |
| 6-C2 | 106.1 | 30.47 | Collapse at 71-74 s |
| 6-C3 | 106.6 | 30.50 | Collapse at 75 s |
| 6-C4 | 106.1 | 30.49 | Horizontal split in center |
| 6-C5 | 106.1 | 30.48 | Collapse at 81 s |
| 6-C6 | 108.1 | 30.47 | Collapse at 75 s |
| 6-C7 | 106.1 | 30.55 | Slow sag following complete rise |

Table 6-2 demonstrates that stable foams were prepared with the lower surface area TG-6110 silica. It is hypothesized that the cell opening properties of the silica compensate for the lack of a cell opening polyol in the formulation. However, even in the absence of a cell opening polyol, foams with the higher surface area CT-1221 silica collapsed. Foam stability did not improve with a change in surfactant concentration, partial substitution of the Tegostab dispersant with an alternative dispersant, Dabco DC 193 surfactant, addition of propylene carbonate, or a reduction in silica concentration.

In addition to the tests described above, foams were characterized for hysteresis loss according to ASTM D-3574 (Procedure B - CFD Hysteresis loss). Table 6-3 shows the mechanical and other properties of molded foams containing TG-6110 silica against a silica-free control. Introduction of TG-6110 silica increased CFD and did not significantly affect resilience in free-rise foams. In molded foams, introduction of TG-6110 silica increased CFD and tear strength but did not significantly impact tensile strength.

**Table 6-3**

| Property | Example (Silica in Polyol Component/Final Formulation (wt%)) | | |
|---|---|---|---|
| | Example 6-C1 (no silica) | Example 6-1 (TG-6110 silica, 6/3.8) | Example 6-2 (TG-6110 silica, 8/5.1) |
| **Free Rise Foam Properties** | | | |
| Density, [pcf] | 2.16 +/- 0.05 | 3.15 ± 0.17 | 3.27 ± 0.25 |
| [kg/m³] | 34.60 +/- 0.80 | 50,46 ± 2.72 | 52.39 ± 4.01 |
| Resilience, ball rebound (%) | 62.7 +/- 1.8 | 64.0 ± 1.0 | 61.7 ± 1.7 |
| CFD at 25% Deflection (kPa) | 0.52 +/- 0.10 | 1.93 ± 0.12 | 1.79 ± 0.16 |
| CFD at 50% Deflection (kPa) | 1.27 +/- 0.12 | 4.23 ± 0.26 | 4.05 ± 0.38 |
| CFD at 65% Deflection (kPa) | 2.87 +/- 0.21 | 9.52 ± 0.56 | 9.22 ± 1.05 |
| **Molded Foam Properties** | | | |
| Molded Density, [pcf] | 3.44 ± 0.09 | 3.45 ± 0.03 | 3.46 ± 0.09 |
| [kg/m³] | 55.11 ± 1.44 | 55.27 ± 0.48 | 55.43 ± 1.44 |
| Resilience, ball rebound (skin on), % | 60.5 ± 2.0 | 57.1 ± 1.0 | 56.2 ± 1.4 |
| Tensile Strength, kPa | 150.56 ± 13.55 | 153.36 ± 10.97 | 148.25 ± 12.17 |
| Tear Strength, [lbf/in] | 4.81 ± 0.35 | 5.36 ± 0.30 | 5.44 ± 0.45 |
| [N/cm] | 8.42 ± 0.61 | 9.38 ± 0.53 | 9.52 ± 0.70 |
| CFD at 25% Deflection (kPa) | 2.54 ± 0.06 | 3.51 ± 0.09 | 3.89 ± 0.28 |
| CFD at 50% Deflection (kPa) | 4.06 ± 0.07 | 5.61 ± 0.17 | 6.18 ± 0.45 |
| CFD at 65% Deflection (kPa) | 7.46 ± 0.17 | 10.10 ± 0.27 | 10.99 ± 0.73 |
| CFD at 50% deflection, 60 s dwell, kPa | 3.55 ± 0.12 | 4.57 ± 0.19 | 5.12 ± 0.38 |
| Hysteresis Loss, % | 42.6 ± 5.3 | 47.5 ± 2.6 | 46.0 ± 2.7 |
| Dry Compression Set, 70°C, 50% RH, 50% Deflection (Ct), % | 5.0 ± 0.3 | 5.1 ± 0.3 | 4.9 ± 0.4 |
| Wet Compression Set, 50°C, 95% RH, 50% Deflection (Ct), % | 32.1 ± 2.4 | 30.6 ± 3.7 | 34.6 ± 1.6 |
| Autoclaved Aged CFD Loss (%) | 8.7 +/- 1.9 | -4.6 +/- 0.9 | 2.4 +/- 1.0 |

### Example 7

15% dispersions of CAB-O-SIL TG-6110 and CT 1221 silicas were prepared in Jeffol G 31-28 glycerin based, ethylene oxide tipped triol (Huntsman) as described above. Polyol components having 6 wt% silica were prepared as described in Example 1 using the formulations set out in Table 7-1 (including Lumulse POE 26 ethoxylated glycerin, Tegostab B 4690 surfactant, diethanolamine LF 85% cross-linker, Dabco 33 LV triethylenediamine, and Toyocat ET bis(2-dimethylaminoethyl) ether). The polyol component was combined with Suprasec 7007 isocyanate as described in Example 1 in the amount listed in Table 7-1 and cast in polyethylene lined boxes as described in Example 1 ("Free-rise foams") to form foams having 3.8 wt% silica. Foam appearance was evaluated visually.

**Table 7-1**

| **Component (g)** | **Example 7-C1** | **Example 7-1** | **Example 7-C2** | **Example 7-2** | **Example 7-C3** |
|---|---|---|---|---|---|
| Jeffol G 31-28 | 97 | 54.5 | 54.5 | 57.5 | 57.5 |
| 15% TG-6110 silica dispersion | - | 42.5 | - | 42.5 | - |
| 15% CT-1221 silica dispersion | - | - | 42.5 | - | 42.5 |
| Lumulse POE 26 | 3 | 3 | 3 | - | - |
| Tegostab B 4690 | 1 | 1 | 1 | 1 | 1 |
| Diethanolamine | 1 | 1 | 1 | 1 | 1 |
| Dabco 33LV | 0.8 | 0.8 | 0.8 | 0.8 | 0.8 |
| Toyocat ET | 0.1 | 0.1 | 0.1 | 0.1 | 0.1 |
| Water* | 3.60 | 3.60 | 3.60 | 3.60 | 3.60 |
| *Total water = added water | | | | | |
| Suprasec 7007 isocyanate | 62.15 | 61.74 | 61.83 | 61.02 | 61.10 |

The foam produced with no silica and the two foams produced with the lower surface area TG-61 10 silica all exhibited uniform and fine cell structures. The foam produced with higher surface area CT-1221 silica and Lumulse POE cell-opening polyol exhibited partial foam collapse, while the foam produced with CT-1221 silica without the cell opening polyol exhibited coarse cells in the core of the foam.

### Example 8

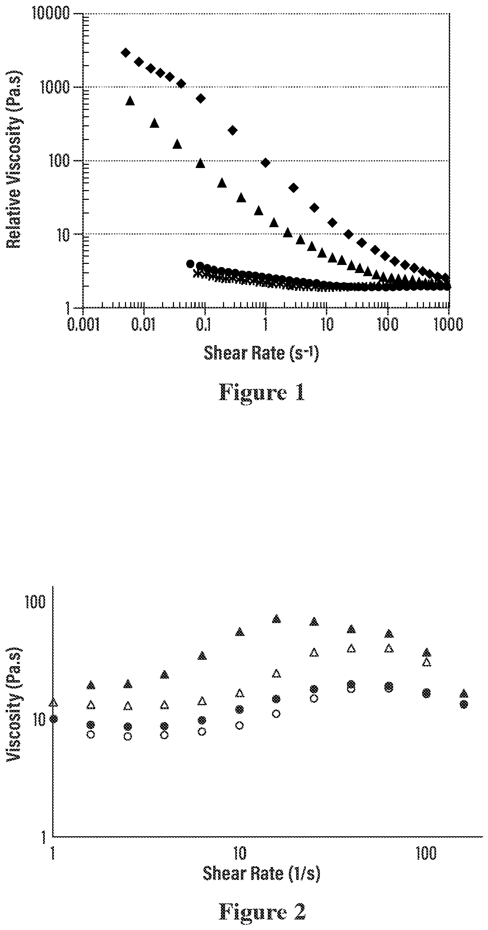

Fumed silica (see Table 8-1, below, all silicas from Cabot Corporation) was combined with Voranol 220-046 polyether polyol (Dow) at a loading of 6 wt% in a Hauschild Speedmixer DAC-150 until a Hegman grind of 5 was achieved. The dispersion was evaluated in a TA Instruments AR2000 Rheometer at 25 °C using a 4 cm parallel plate geometry and a gap of 500 microns. Viscosity data is shown in Figure 1. The data show that fumed silica treated with octylsilyl groups or a siloxane polymer dramatically increases viscosity in comparison to fumed silicas treated alkylsilyl groups having three or fewer carbons.

**Table 8-1**

| Silica grade | Surface groups | Symbol in Figure 1 |
|---|---|---|
| TS-610 | Dimethylsilyl | * |
| TS-530 | Trimethylsilyl | ● |
| TS-382 | Octylsilyl | ▲ |
| TS-720 | Polydimethylsiloxane | ◆ |

### Example 9

CAB-O-SIL TG-6110 (circles) and CT-1221 (triangles) silicas were combined with Voranol 6340 (closed symbols) and Jeffol G 31-28f (open symbols) polyols at a loading of 15% as described in Example 1. Viscosity was measured as in Example 8 and plotted against shear rate. The results are shown in Figure 2 and show that the higher surface area CT-1221 silica also leads to a dramatic increase in viscosity.

### Example 10

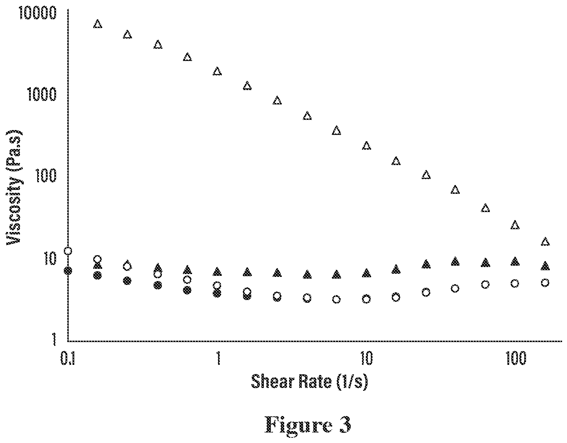

CAB-O-SIL TG-6110 (circles) and L90 (triangles) silicas were combined with Voranol 232-034 (closed symbols) polyol at a loading of 10% as described in Example 1. Viscosity was measured as in Example 8 and plotted against shear rate. The interaction of the hydrophobic TG-6110 silica and untreated, hydrophilic L90 silica with amine catalyst was evaluated by adding 1 wt% triethanolamine to the samples, mixing for 30 s in a SpeedMixer (Flackteck, Landrum, SC), allowing the sample to incubate for 30 mins at ambient temperature, and then measuring the viscosity again (open symbols). The results are shown in Figure 3 and show that the untreated L90 silica leads to a dramatic increase in polyol viscosity. In a polymerizing system, such an increase in viscosity can prevent the proper development of air bubbles in the foam.

The foregoing description of preferred embodiments of the present invention has been presented for the purposes of illustration and description. It is not intended to be exhaustive or to limit the invention to the precise form disclosed. Modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto.

## Claims

1. A method of producing flexible polyurethane foam, comprising:
providing a polyol composition comprising at least a first polyol, the first polyol having a weight average molecular weight of 3000 to 6000 and a functionality from 2.5 to 3.5, and up to 10 wt% of a fumed silica having a surface area from 50 to 150 m²/g, wherein the fumed silica has C1-C3 alkylsilyl groups at its surface;
combining the polyol composition, a polyisocyanate having a functionality of 1.8 to 2.5, water, and a tertiary amine catalyst to form a prepolymer composition; and
allowing the prepolymer composition to polymerize to form an open cell foam structure having a density of 28.83 to 64.07 kg/m³ (1.8 to 4 pcf) and one or more of a) a resilience, as measured via ball rebound according to ASTM D3574, Test H, of at least 40%, and b) a dry compression set no greater than 15%.

2. The method of claim 1, wherein the polyisocyanate comprises hexamethylene diisocyanate (HOI), phenylene diisocyanate (POI), 2,4-toluene diisocyanate (2,4-TDI), 2,6-toluene diisocyanate (2,6-TDI), 4,4'-diphenylmethane diisocyanate (MDI), an isomeric mixture of diphenylmethane diisocyanate, or a mixture of two or more of these.

3. The method of any of claims 1-2, wherein the first polyol comprises a polyether polyol or a polyester polyol.

4. The method of any of claims 1-3, wherein the polyol composition further comprises a second polyol, the second polyol having a weight average molecular weight from 2000 to 10000.

5. The method of any of claims 1-4, wherein allowing comprises charging the prepolymer composition into a mold having one side open to the atmosphere.

6. The method of claim 5, wherein the flexible polyurethane foam has a density of 28.83 to 48.06 kg/m³ (1.8 to 3 pcf).

7. The method of any of claims 1-4, wherein allowing comprises charging the prepolymer composition into a mold and closing the mold.

8. The method of claim 7, wherein the flexible polyurethane foam has a density of 32.04 to 64.07 kg/m³ (2 to 4 pcf).

9. The method of any of claims 1-8, wherein the C1-C3 alkylsilyl group is trimethylsilyl or dimethylsilyl.

10. The method of any of claims 1-9, wherein the flexible polyurethane foam has a compression force deflection at 50% as measured by ASTM D3574 that is improved at least 30 %, with respect to a flexible polyurethane foam produced by the same method but with the silica replaced with an equal part by mass of the first polyol.

11. A flexible polyurethane foam comprising up to 10 wt% of a fumed silica having a surface area from 50 to 150 m²/g, wherein the fumed silica has C1-C3 alkylsilyl groups at its surface, the flexible polyurethane foam exhibiting has a resilience, as measured via ball rebound according to ASTM D3574, Test H, of at least 40%, a dry compression set no greater than 15%, or both.

12. The flexible polyurethane foam of claim 11, wherein the C1-C3 alkylsilyl group is trimethylsilyl or dimethylsilyl.

13. The flexible polyurethane foam of any of claims 11 or 12, wherein the foam is a molded foam or a free-rise foam.

14. The flexible polyurethane foam of any of claims 11-13, wherein the polyurethane comprises a polyether polyurethane or a polyester polyurethane.

15. The flexible polyurethane foam of any of claims 11-14, having a density of 28.83 to 64.07 kg/m³ (1.8 to 4 pcf).

16. The flexible polyurethane foam of any of claims 11-16, having a compression force deflection at 50% as measured by ASTM D3574 that is at least 30%, greater than a flexible polyurethane foam having the same composition but with polyol replacing the silica.

## Patentansprüche

1. Verfahren zur Herstellung von Polyurethan-Weichschaum, umfassend:
Bereitstellen einer Polyol-Zusammensetzung, umfassend mindestens ein erstes Polyol, wobei das erste Polyol ein gewichtsmittleres Molekulargewicht von 3000 bis 6000 und eine Funktionalität von 2,5 bis 3,5 aufweist, und bis zu 10 Gew.-% eines pyrogenen Siliciumdioxids mit einer Oberfläche von 50 bis 150 m²/g, wobei das pyrogene Siliciumdioxid C1-C3-Alkylsilylgruppen an seiner Oberfläche aufweist;
Zusammenbringen der Polyol-Zusammensetzung, eines Polyisocyanats mit einer Funktionalität von 1,8 bis 2,5, Wasser und eines tertiären Amin-Katalysators, um eine Präpolymer-Zusammensetzung zu bilden; und
Polymerisieren lassen der Präpolymer-Zusammensetzung, um eine offenzellige Schaumstruktur zu bilden, die eine Dichte von 28,83 bis 64,07 kg/m³ (1,8 bis 4 pcf) und eine oder mehrere der folgenden Eigenschaften aufweist: a) ein Rückstellvermögen, gemessen durch Kugelrückprall gemäß ASTM D3574, Test H, von mindestens 40 %, und b) einen Trocken-Druckverformungsrest von nicht mehr als 15 %.

2. Verfahren nach Anspruch 1, wobei das Polyisocyanat Hexamethylendiisocyanat (HDI), Phenylendiisocyanat (PDI), 2,4-Toluoldiisocyanat (2,4-TDI), 2,6-Toluoldiisocyanat (2,6-TDI), 4,4'-Diphenylmethandiisocyanat (MDI), ein isomeres Gemisch von Diphenylmethandiisocyanat oder ein Gemisch von zwei oder mehreren dieser Stoffe umfasst.

3. Verfahren nach einem der Ansprüche 1 bis 2, wobei das erste Polyol ein Polyetherpolyol oder ein Polyesterpolyol umfasst.

4. Verfahren nach einem der Ansprüche 1 bis 3, wobei die Polyol-Zusammensetzung ferner ein zweites Polyol umfasst, wobei das zweite Polyol ein gewichtsmittleres Molekulargewicht von 2000 bis 10000 aufweist.

5. Verfahren nach einem der Ansprüche 1 bis 4, wobei das Polymerisieren lassen das Einfüllen der Präpolymer-Zusammensetzung in eine Form umfasst, deren eine Seite zur Atmosphäre hin offen ist.

6. Verfahren nach Anspruch 5, wobei der Polyurethan-Weichschaum eine Dichte von 28,83 bis 48,06 kg/m³ (1,8 bis 3 pcf) aufweist.

7. Verfahren nach einem der Ansprüche 1 bis 4, wobei das Polymerisieren lassen das Einfüllen der Prepolymer-Zusammensetzung in eine Form und das Schließen der Form umfasst.

8. Verfahren nach Anspruch 7, wobei der Polyurethan-Weichschaum eine Dichte von 32,04 bis 64,07 kg/m³ (2 bis 4 pcf) aufweist.

9. Verfahren nach einem der Ansprüche 1 bis 8, wobei die C1-C3-Alkylsilylgruppe Trimethylsilyl oder Dimethylsilyl ist.

10. Verfahren nach einem der Ansprüche 1 bis 9, wobei der Polyurethan-Weichschaum eine nach ASTM D3574 gemessene Druckkraftverformung bei 50 % aufweist, die gegenüber einem Polyurethan-Weichschaum, der nach demselben Verfahren hergestellt wurde, bei dem jedoch das Siliciumdioxid durch einen gleichen Massenteil des ersten Polyols ersetzt wurde, um mindestens 30 %, beispielsweise verbessert ist.

11. Polyurethan-Weichschaum, umfassend bis zu 10 Gew.-% eines pyrogenen Siliciumdioxids mit einer Oberfläche von 50 bis 150 m²/g, wobei das pyrogene Siliciumdioxid C1-C3-Alkylsilylgruppen an seiner Oberfläche aufweist, wobei der Polyurethan-Weichschaumstoff ein Rückstellvermögen, gemessen durch Kugelrückprall gemäß ASTM D3574, Test H, von mindestens 40 %, einen Trocken-Druckverformungsrest von nicht mehr als 15 %, oder beides aufweist.

12. Polyurethan-Weichschaum nach Anspruch 11, wobei die C1-C3-Alkylsilylgruppe Trimethylsilyl oder Dimethylsilyl ist.

13. Polyurethan-Weichschaum nach einem der Ansprüche 11 oder 12, wobei der Schaum ein Formschaum oder ein frei aufsteigender Schaum ist.

14. Polyurethan-Weichschaum nach einem der Ansprüche 11-13, wobei das Polyurethan ein Polyetherpolyurethan oder ein Polyesterpolyurethan umfasst.

15. Polyurethan-Weichschaum nach einem der Ansprüche 11-14, der eine Dichte von 28,83 bis 64,07 kg/m³ (1,8 bis 4 pcf) aufweist.

16. Polyurethan-Weichschaum nach einem der Ansprüche 11 bis 16 mit einer Druckkraftverformung bei 50 %, gemessen nach ASTM D3574, die mindestens 30 % größer ist als die eines Polyurethan-Weichschaums mit derselben Zusammensetzung, bei dem jedoch Polyol das Siliciumdioxid ersetzt.

## Revendications

1. Procédé de production de mousse de polyuréthane souple, comprenant les étapes consistant à :
se procurer une composition de polyol comprenant au moins un premier polyol, le premier polyol ayant une masse moléculaire moyenne en poids de 3000 à 6000 et une fonctionnalité de 2,5 à 3,5, et jusqu'à 10 % en poids d'une silice fumée ayant une surface spécifique de 50 à 150 m²/g, la silice fumée ayant des groupes alkylsilyle en C1-C3 à sa surface ;
combiner la composition de polyol, un polyisocyanate ayant une fonctionnalité de 1,8 à 2,5, de l'eau, et un catalyseur amine tertiaire pour former une composition de prépolymère ; et
permettre à la composition de prépolymère de polymériser pour former une structure de mousse à cellules ouvertes ayant une masse volumique de 28,83 à 64,07 kg/m³ (1,8 à 4 pcf) et une ou plusieurs parmi a) une résilience, telle que mesurée par rebondissement d'une bille conformément à ASTM D3574, Test H, d'au moins 40 %, et b) une déformation rémanente après compression à sec de pas plus de 15 %.

2. Procédé selon la revendication 1, dans lequel le polyisocyanate comprend de l'hexaméthylène diisocyanate (HDI), du 2,4-toluène diisocyanate (2,4-TDI), du 2,6-toluène diisocyanate (2,6-TDI), du 4,4'-diphénylméthane diisocyanate (MDI), un mélange isomérique de diphénylméthane diisocyanate, ou un mélange de deux ou plus de ceux-ci.

3. Procédé selon l'une quelconque des revendications 1-2, dans lequel le premier polyol comprend un polyéther polyol ou un polyester polyol.

4. Procédé selon l'une quelconque des revendications 1 à 3, dans lequel la composition de polyol comprend en outre un second polyol, le second polyol ayant une masse moléculaire moyenne en poids de 2000 à 10 000.

5. Procédé selon l'une quelconque des revendications 1 à 4, dans lequel permettre comprend le fait de charger la composition de prépolymère dans un moule ayant un côté ouvert sur l'atmosphère.

6. Procédé selon la revendication 5, dans lequel la mousse de polyuréthane souple a une masse volumique de 28,83 à 48,06 kg/m³ (1,8 à 3 pcf).

7. Procédé selon l'une quelconque des revendications 1 à 4, dans lequel permettre comprend le fait de charger la composition de prépolymère dans un moule et de fermer le moule.

8. Procédé selon la revendication 7, dans lequel la mousse de polyuréthane souple a une masse volumique de 32,04 à 64,07 kg/m³ (2 à 4 pcf).

9. Procédé selon l'une quelconque des revendications 1 à 8, dans lequel le groupe alkylsilyle en C1-C3 est un triméthylsilyle ou diméthylsilyle.

10. Procédé selon l'une quelconque des revendications 1 à 9, dans lequel la mousse de polyuréthane souple a une déflexion de force de compression à 50 % telle que mesurée selon ASTM D3574 qui est améliorée d'au moins 30 %, par rapport à une mousse de polyuréthane souple produite par le même procédé mais avec la silice remplacée par une part égale en masse du premier polyol.

11. Mousse de polyuréthane souple comprenant jusqu'à 10 % en poids d'une silice fumée ayant une surface spécifique de 50 à 150 m²/g, dans lequel la silice fumée a des groupes alkylsilyle en C1-C3 à sa surface, la mousse de polyuréthane souple présentant une résilience, telle que mesurée par rebondissement d'une bille conformément à ASTM D3574, Test H, d'au moins 40 %, une déformation rémanente après compression à sec de pas plus de 15 %, ou les deux.

12. Mousse de polyuréthane souple selon la revendication 11, dans laquelle le groupe alkylsilyle en C1-C3 est un triméthylsilyle ou diméthylsilyle.

13. Mousse de polyuréthane souple selon la revendication 11 ou 12, dans laquelle la mousse est une mousse moulée ou une mousse à expansion libre.

14. Mousse de polyuréthane souple selon l'une quelconque des revendications 11 à 13, dans laquelle le polyuréthane comprend un polyéther polyuréthane ou un polyester polyuréthane.

15. Mousse de polyuréthane souple selon l'une quelconque des revendications 11 à 14, ayant une masse volumique de 28,83 à 64,07 kg/m³ (1,8 à 4 pcf).

16. Mousse de polyuréthane souple selon l'une quelconque des revendications 11 à 16, ayant une déflexion de force de compression à 50 % telle que mesurée selon ASTM D3574 qui est au moins 30 % plus grande que celle d'une mousse de polyuréthane souple ayant la même composition mais avec un polyol remplaçant la silice.
